# EUROPEAN PATENT APPLICATION

(11) **EP 1 808 500 A1**
(43) Date of publication of application: **18.07.2007**
(21) Application number: 06000643.4
(22) Date of filing: 12.01.2006
(51) Int. Cl.: C21D 9/573, B21B 45/02, C21D 1/767, C21D 1/613

(54) **Gas quenching device for the production of metal threads**

(71) Applicant: Linde Aktiengesellschaft, 65189 Wiesbaden (DE)
(72) Inventor: Fälldin, Anders, 16836 Bromma (SE); Öhrling, Johann, 12638 Hägersten (SE)

(57) **Abstract**

The invention relates to a heat exchanger for cooling elongated metal products, such as threads or strips. The apparatus comprises a longitudinal passageway (2) with an upstream end and with a downstream end, a backflow line (8) connecting said upstream end and said downstream end, whereby forming a closed loop pipeline (2,8), a product inlet (3) and a product outlet (4) into said closed loop pipeline (2,8), and means (7) for introducing a cold medium into said closed loop pipeline (2,8).
In a preferred embodiment, the cold medium is cryogenic gas, and the means for introducing it into the closed loop pipeline is an expansion nozzle, such as a laval nozzle.

## Description

The invention relates to a heat exchanger and to a method for cooling a long product wherein said product is brought into direct heat exchange with a cold medium.

In the production of long metal products, such as metal threads or metal strips, the metal products are subjected to a heat treatment in a heating furnace. After the products have left the heating furnace it is often necessary to immediately cool down the products in order to obtain a high quality product having no defects on the surface layer.

It is an object of the invention to provide a heat exchanger for improved cooling of long products, for example of metal threads.

This object is achieved by a heat exchanger comprising
- a longitudinal passageway with an upstream end and with a downstream end,
- a backflow line connecting said upstream end and said downstream end, whereby forming a closed loop pipeline,
- a product inlet and a product outlet into said closed loop pipeline,
- and means for introducing a cold medium into said closed loop pipeline.

It is a further object to provide an improved method for cooling long products, such as hot metal threads.

This object is achieved by a method for cooling a long product wherein said product is brought into direct heat exchange with a cold medium, characterized in that said cold medium is introduced into a closed loop pipeline comprising a longitudinal passageway, wherein at least a part of said cold medium is circulated within said closed loop pipeline, and wherein said product is passed through said longitudinal passageway.

As used herein, the term "long product" means that the product extension in one direction, its length, essentially exceeds the width and the height of the product. Examples of such long products are threads, wires or strips, especially of metal.

As used herein, the term "longitudinal passageway" means a passageway, a tube or a channel of a heat exchanger wherein the extension of the passageway in the direction of its length essentially exceeds its width and its height.

According to the invention a heat exchanger comprising a closed loop pipeline is used to cool the long product. The product enters the closed loop pipeline through a product inlet and leaves it through a product outlet. During its passage through a part of the closed loop pipeline the long product is brought into direct heat exchanging contact with a cold medium. In order to use most of the cooling capacity of the cold medium and thus to increase the cooling efficiency, the cold medium is introduced into a closed loop pipeline. At least a part of the cold medium is circulated within the closed loop pipeline so that it comes into heat exchanging contact with the product more than once.

As described, part of the cold medium, preferably most of the cold medium, is circulated within the closed loop pipeline for re-use as cooling medium. But some of the cold medium is vented out of the closed loop pipeline through the product inlet and the product outlet. The cold medium vented out through the product inlet and outlet openings is blown into the atmosphere or it can be collected and passed to a gas storage container to be used later for other applications, such as inerting.

In a preferred embodiment the longitudinal passageway is horizontally oriented. This is in particular advantageous for cooling long metal products after a heat treatment step. The product, for example a metal thread or metal wire leaving a heating furnace, can be passed directly from the heating furnace to the heat exchanger. So the metal product can be cooled immediately after the heat treatment.

The long product to be cooled is passed through a longitudinal passageway which forms part of the closed loop pipeline. Preferably the product inlet and the product outlet are essentially located at the upstream end and at the downstream end of the longitudinal passageway. The direct distance between the product inlet and the product outlet essentially extends straight through the longitudinal passageway.

The cold medium is preferably introduced into the closed loop pipeline through an expansion nozzle, for example a Laval nozzle. The cold medium is passed through the expansion nozzle so that it is accelerated and expanded. Thus the temperature of the cold medium can be lowered and the cooling effect can be increased. Further the fast stream of expanded cold medium is used to suck in cold medium which has been returned through the backflow line.

It is advantageous to introduce the cold medium directly into the longitudinal passageway. Thereby the product to be cooled immediately comes into contact with the cold medium when the temperatur of the cold medium is lowest. When an expansion nozzle is used to spray the cold medium into the longitudinal passageway, a maximum ejector force and a fast stream of cold medium is created. This fast stream of cold medium generates a turbulent zone within the longitudinal passageway which essentially improves the heat exchange between the cold medium and the product to be cooled.

It is preferred to use a cryogenic medium as cold medium, preferably nitrogen, carbon dioxide or argon. Within the closed loop pipeline and in particular in the longitudinal passageway the cold medium is in gaseous form. The cryogenic medium may be supplied as a cryogenic gas or as a liquid cryogen. In the later case the means for introducing a cold medium into said closed loop pipeline preferably comprise a medium supply line which is connected to a liquid cryogen supply, in particular a liquid nitrogen storage or a liquid carbon dioxide storage. Prior to entry into the closed loop pipeline the liquid cryogen is expanded and transferred into its gaseous form.

The cold medium may also be expanded in an expansion nozzle and then used to move or rotate a turbine. The turbine may be designed to act as a fan and to mechanically create a backflow of cold medium through the backflow line.

It is preferred to have a backflow through the backflow line which is at least 4 times, preferably 7 times higher than the flow of cold medium entering the closed loop pipeline. A nozzle used for introducing the cold medium into the closed loop pipeline can normally suck approximately 6 to 7 times the flow coming out of the nozzle, depending on the design of the nozzle. In case a higher backflow is desired or needed it is advantageous to use a fan to create and / or to regulate the backflow.

Preferably the backflow line is provided with flow regulation means in order to optimize the relation between circulated cold medium and fresh cold medium. The flow through said backflow line is preferably regulated depending on the temperature of the cold medium after it has passed the longitudinal passageway, and / or on the temperature of the cold medium prior to its introduction into the closed loop pipeline, and / or on the temperature of the cold medium immediately after its introduction into the closed loop pipeline. In general it is advantageous to check the temperature in different parts of the heat exchanger in order to create the best temperature and cooling conditions.

The backflow of cold medium through the backflow line may be caused by the introduction of fresh cold medium which sucks cold medium from the backflow line into the longitudinal passageway. It is further possible to have a fan or any other means for creating a circulation of cold medium within the closed loop pipeline.

According to a preferred embodiment the heat exchanger further comprises a cooling water passageway in heat exchange contact with the closed loop pipeline. In this case part of the heat energy which has been transferred from the product to be cooled to the cold medium circulating in the closed loop pipeline is transferred to cooling water flowing through the cooling water passageway. The cooling water passageway is preferably located close to the longitudinal passageway, but it is also possible to locate the cooling water passageway in contact with any other segment of the closed loop pipeline. The cold medium circulating in the closed loop pipeline acts as a heat transfer medium to transfer the heat from the product to the cooling water wherein the heat transfer between the cold medium and the cooling water is indirect, that is without direct contact of the cold medium and the the cooling water. Preferably the flow of the cooling water is directly opposed to the flow of the circulating cold medium.

In order to improve the heat transfer between the product and the cold medium it is advantageous to create a turbulent flow of cold medium in the longitudinal passageway. This turbulence may be created by the high speed of the cold medium. By using a laval nozzle the speed of the cold medium can be accelerated to high values, preferably to more than sound speed.

The invention is in particular useful for cooling of long metal products after a heat treatment, especially for cooling of metal threads or metal wires right after a heating furnace. Metal strips and tubes of smaller dimensions can also be cooled in the inventive device.

According to a preferred embodiment gaseous nitrogen is used the cold medium. The gaseous nitrogen is sprayed into the longitudinal passageway and circulated through the closed loop pipeline. The backflow line comprises a heat exchanger which uses liquid nitrogen to cool down the circulating gaseous nitrogen. During the heat exchange with the circulating gaseous nitrogen the liquid nitrogen vaporizes. The vaporized nitrogen is then sprayed into the longitudinal passageway.

Further it can be advantageous to spray liquid nitrogen on the long product through an extra liquid nitrogen nozzle to make up for gas leakage in the closed loop pipeline.

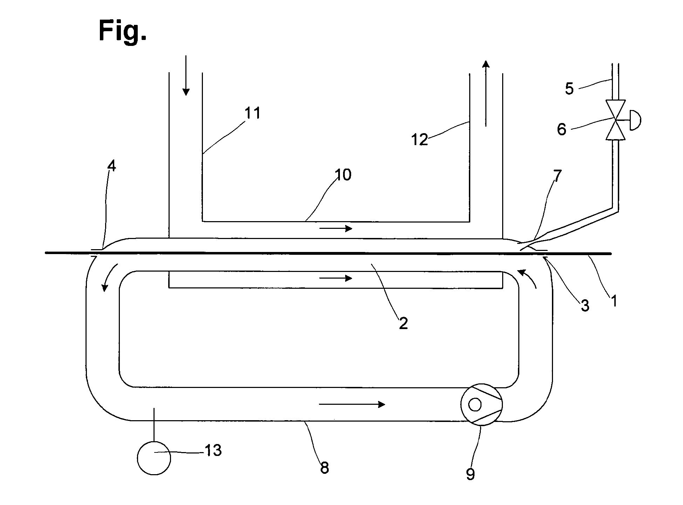

The invention as well as further details and preferred embodiments of the invention are disclosed in the following description and illustrated in the accompanying drawing, in which the
figure shows an inventive heat exchanger for cooling hot metal threads.

The heat exchanger is intended to cool a metal thread immediately after a heating furnace. Metal thread 1 is cooled in direct heat exchange with a cold medium in a longitudinal passageway 2. The longitudinal passageway 2 has a product inlet opening 3 and a product outlet 4 in order to pass the metal thread 1 through the longitudinal passageway 2.

The metal thread 1 is cooled in direct heat exchange with a cryogenic gas. Gaseous nitrogen or any other cryogenic gas, for example carbon dioxide, argon or mixtures thereof, is suitable. It is also possible to feed liquid carbon dioxide to the expansion nozzle 7 where it is expanded and transferred into the gaseous state.

The cryogenic gas is withdrawn from a supply tank (not shown in the figure) via pipe 5. The flow of cryogenic gas can be regulated by control valve 6. At its downstream end supply pipe 5 is provided with an expansion nozzle 7, preferably of the Laval type, which extends into the longitudinal passageway 2. Cryogenic gas leaving expansion nozzle 7 thus directly enters longitudinal passageway 2.

Both ends of the longitudinal passageway 2 are interconnected by a backflow line 8. Backflow line 8 is provided with a fan 9 to propel the flow of cryogenic gas through the backflow line 8 if necessary. It is also possible to use a backflow line 8 without any additional propelling means. Longitudinal passageway 2 and backflow line 8 form a closed loop pipeline.

The longitudinal passageway 2 is surrounded by a cooling water passageway 10 with an inlet 11 and an outlet 12 for cooling water.

The cryogenic gas is fed through supply pipe 5 and sprayed into longitudinal passageway 2 through the expansion nozzle 7. The fast ejector stream of cryogenic gas leaving expansion nozzle 7 sucks gas from the backflow line 8. The surrounding of expansion nozzle 7 is designed in such a way to create a maximum flow of gas through backflow line 8. Approximately 4 to 7 times of the cryogenic gas entering the longitudinal passageway 2 through expansion nozzle 7 is circulated through backflow line 8.

The fresh cryogenic gas leaving expansion nozzle 7 and the circulating gas which has been sucked from the backflow line 8 are mixed in the longitudinal passageway 2 and create a turbulent flow. The turbulent cryogenic gas comes into direct contact with the hot metal thread 1 and heat is transferred from the metal thread 1 to the cryogenic gas whereby the metal thread 1 is cooled. The cryogenic gas transfers the heat energy to the cooling water flowing through the cooling water passageway 10.

A temperature sensor 13 in the closed loop pipeline detects the actual temperature of the recirculated gas. Depending on that temperature the amount of fresh cryogenic gas entering the closed loop pipeline through expansion nozzle 7 is regulated.

## Claims

1. Heat exchanger comprising
- a longitudinal passageway (2) with an upstream end and with a downstream end,
- a backflow line (8) connecting said upstream end and said downstream end, whereby forming a closed loop pipeline (2, 8),
- a product inlet (3) and a product outlet (4) into said closed loop pipeline (2, 8),
- and means (7) for introducing a cold medium into said closed loop pipeline (2, 8).

2. Heat exchanger according to claim 1 **characterized in that** said product inlet (3) and said product outlet (4) are located essentially at said upstream end and at said downstream end, respectively.

3. Heat exchanger according to any of claims 1 or 2, **characterized in that** said means (7) for introducing a cold medium into said closed loop pipeline (2, 8) comprise an expansion nozzle, preferably a Laval nozzle.

4. Heat exchanger according to any of claims 1 to 3, further comprising a cooling water passageway (10) in heat exchange contact with said closed loop pipeline (2, 8).

5. Heat exchanger according to claim 4 **characterized in that** said cooling water passageway (10) is in heat exchange contact with said longitudinal passageway (2).

6. Method for cooling a long product wherein said product is brought into direct heat exchange with a cold medium, **characterized in that** said cold medium is introduced into a closed loop pipeline (2, 8) comprising a longitudinal passageway (2), wherein at least a part of said cold medium is circulated within said closed loop pipeline (2, 8), and wherein said product is passed through said longitudinal passageway (2).

7. Method according to claim 6, **characterized in that** a cryogenic gas, preferably nitrogen or carbon dioxide, is used as said cold medium.

8. Method according to any of claims 6 or 7, **characterized in that** the flow of cold medium circulating through said closed loop pipeline (2, 8) is 4 to 7 times the flow of the cold medium introduced into said closed loop pipeline (2, 8).

9. Method according to any of claims 6 to 8, **characterized in that** a turbulent flow is created within said longitudinal passageway (2).

10. Method according to any of claims 6 to 9, **characterized in that** said longitudinal passageway (2) is cooled in indirect heat exchange with cooling water.

11. Method according to any of claims 6 to 10 for cooling metal threads, especially after a heating furnace.
